# EUROPÄISCHE PATENTSCHRIFT

(11) **EP 0 502 557 B1**
(45) Veröffentlichungstag und Bekanntmachung des Hinweises auf die Patenterteilung: **10.04.1996**
(21) Anmeldenummer: 92107466.2
(22) Anmeldetag: 11.07.1989
(51) Int. Cl.: A01D 34/68, A01D 34/67, A01D 34/74

(54) **Rasenmäher**
Lawn mower
Tondeuse à gazon

(30) Priorität: 17.08.1988 DE 3827925
(43) Veröffentlichungstag der Anmeldung: 09.09.1992
(62) Teilanmeldung aus: 89112627.8
(73) Patentinhaber: BRILL PRODUKTIONS GMBH, D-58456 Witten (DE)
(72) Erfinder: Locher, Ottmar, W-7900 Ulm-Donaustetten (DE); Lindermeir, Wolfgang, W-Untermarchtal (DE); Stephany, Christian, W-7900 Ulm (DE); Katzer, Johann, W-7910 Neu-Ulm (DE); Besserer, Bernhard, W-7912 Weissenhorn (DE); Lopic, Franz, W-7911 Nersingen (DE)
(74) Vertreter: Patentanwälte Ruff, Beier, Schöndorf und Mütschele

(56) Entgegenhaltungen:
- EP-A- 0 047 502
- GB-A- 1 141 011
- US-A- 2 776 844
- US-A- 2 926 926
- US-A- 3 114 229

## Beschreibung

Die Erfindung betrifft einen Rasenmäher nach dem Oberbegriff des Patentanspruches 1.

Derartige Rasenmäher können am unteren Ende einer Motorwelle unmittelbar für die Aufnahme eines Mähwerkzeuges ausgebildet sein, wobei die durch die Höhenlage des Mähwerkzeuges bestimmte Schnittlänge des Rasenmähers durch eine Verstelleinrichtung veränderbar sein kann. Um Einstellzustände des Rasenmähers sichtbar zu machen, ist mindestens eine Anzeigeeinrichtung vorgesehen.

Nach der US-A-2 926 926 z.B. dient die Anzeigeeinrichtung zur graduellen Darstellung der Höheneinstellung des Rasenmähers. Wie im Falle der US-A-2 776 844, die die Merkmale des Oberbegriffs des Anspruchs 1 zeigt, ist die Anzeigeeinrichtung jedoch über zahlreiche Übertragungsorgane von einer Handhabe angetrieben, so daß sie nicht nur weit entfernt von der Handhabe liegt, sondern sich auch komplizierte Antriebsverhältnisse ergeben.

Der Erfindung liegt daher die Aufgabe zugrunde, einen Rasenmäher der genannten Art zu schaffen, bei welchem Nachteile bekannter Ausbildungen vermieden sind und mit welchem insbesondere auf einfache Weise die jeweilige Einstellung ohne besondere Schwierigkeiten festgestellt werden kann. Auch soll ggf. eine Höhenverstellung des Mähwerkzeuges gewährleistet sein. Des weiteren soll bevorzugt auch erreicht werden, daß die Höhenverstellung sehr leichtgängig und ggf. zentral für alle Läufer gemeinsam vorgenommen werden kann.

Zur Lösung der genannten Aufgabe sind die Merkmale des Patentanspruches 1 vorgesehen. Die Anzeigeeinrichtung ist zweckmäßig eine Höhen-Anzeigeeinrichtung. Sie weist ein Anzeigeorgan mit Höhenbezeichnungen aufweist, das in Abhängigkeit von der Höheneinstellung stehende Anzeigelagen aufweist und in der jeweiligen Anzeigelage an einer Gegenmarkierung, beispielsweise in einem fensterartigen Anzeigefeld, die zugehörige Höhenbezeichnung zeigt.

Damit dieses Anzeigeorgan nicht unmittelbar an einer Läuferlagerung, beispielsweise als Stab, raumaufwendig angebracht werden muß, sondern völlig gesondert von den Läufern beispielsweise so liegen kann, daß das Anzeigefeld unmittelbar benachbart zur Einstell-Handhabe liegt, ist das Anzeigeorgan über mindestens eine, insbesondere ausschließlich eine Getriebestufe mit der Verstelleinrichtung gekuppelt. Ist dabei die Einstell-Handhabe fahrgestellfest über annähernd eine bzw. mehr als eine Umdrehung drehbar gelagert, so ist die Relativlage zwischen Einstell-Handhabe und Anzeigefeld stets die gleiche, und außerdem kann das Anzeigeorgan im wesentlichen unmittelbar von der Einstell-Handhabe angetrieben bzw. stufenweise geschaltet werden, wodurch eine sehr fein graduierte Anzeige möglich ist.

Eine sehr einfache mechanische Kupplung des Anzeigeorganes mit der Höhen-Verstelleinrichtung ergibt sich, wenn das Anzeigeorgan, vorzugsweise um eine zu dem es treibenden Stellglied, nämlich beispielsweise der Handhabe, parallele Achse drehbar gelagert ist, da dann ein einstufiges Getriebe nach Art eines Zahnrad- oder Reibradgetriebes ausreicht und ein Rotor dieses Getriebes unmittelbar das Anzeigeorgan bilden kann. Zweckmäßig ist jedoch zwischen dem Anzeigeorgan und dem es treibenden Stellglied ein Untersetzungsgetriebe, beispielsweise ein Schrittschaltwerk, derart vorgesehen, daß das Anzeigeorgan je voller Umdrehung des treibenden Stellgliedes nur einen dem Abstand zwischen zwei benachbarten Höhenbezeichnungen entsprechenden Teilschritt oder ggf. mindestens zwei solche Teilschritte ausführt. Dadurch kann der Durchmesser des Anzeigeorganes bzw. von dessen dem Mitnehmer zugeordneten Schaltkranz etwa gleich groß wie der des treibenden Stellgliedes gewählt werden.

Bevorzugt ist eine auf wenigstens einen Verstellträger wirkende Höhen-Verstelleinrichtung zur gegenseitigen Verstellung des Mähwerkzeug-Antriebes und mindestens eines Läufers vorgesehen, mit welcher durch Betätigen mindestens einer Einstell-Handhabe eine Höhenverstellung über den gesamten, vorbestimmten Stellweg möglich ist. Es ist zwar denkbar, beispielsweise für gesonderte Laufradachsen des Fahrgestelles, gesonderte Einstell-Handhaben vorzusehen, jedoch ergibt sich eine besonders vorteilhafte Ausbildung, wenn alle Läufer bzw. Laufräder bzw. Laufachsen mit einer einzigen Einstell-Handhabe gemeinsam verstellbar sind.

Eine besonders vorteilhafte Weiterbildung, insbesondere eines Rasenmähers der beschriebenen Art, besteht darin, daß zwischen dem Verstellträger und der Handhabe ein mindestens einstufiges Untersetzungsgetriebe vorgesehen ist, so daß eine sehr leichtgängige Höhenverstellung erreicht werden kann. Es ist zwar denkbar, dieses Untersetzungsgetriebe als hydraulischen oder ähnlichen Antrieb auszubilden bzw. durch einen entsprechenden Arbeitszylinder zu bilden, jedoch ergibt sich eine besonders einfache Anordnung, wenn das Untersetzungsgetriebe als mechanisches Getriebe, beispielsweise als Schneckentrieb, Spindeltrieb, Hebeltrieb oder ähnliches ausgebildet ist.

Zur Erzielung besonders kompakter Abmessungen liegen die kämmend ineinandergreifenden Getriebeglieder des Untersetzungsgetriebes zweckmäßig koaxial zueinander bzw. ineinander, wie das auch im Falle eines Arbeitszylinders gegeben ist, der ein in einem zylinderartigen Getriebeglied axial bewegbares kolbenartiges Getriebeglied aufweist, wobei diese Getriebeglieder jedoch zweckmäßig mechanisch, nämlich mit einem Innen- und einem Außengewinde ineinandergreifen.

Noch kompaktere Abmessungen bei erhöhter Funktionssicherheit können erreicht werden, wenn das treibende Getriebeglied des Untersetzungsgetriebes unmittelbar an der Handhabe vorgesehen bzw. durch diese gebildet ist, wodurch das Untersetzungsgetriebe auch oberhalb des Verstellträgers bzw. der Laufradachsen oder der Laufräder geschützt angeordnet werden kann.

Die Übertragung der Stellkraft von der Einstell-Handhabe zu dem oder den Verstellträgern kann auch wenigstens teilweise durch einen Hebel- bzw. Lenkertrieb erfolgen, wobei zweckmäßig das getriebene Getriebeglied des Untersetzungsgetriebes unmittelbar über einen beispielsweise nach Art einer Kolben- bzw. Pleuelstange ausgebildeten Lenker mit dem Verstellträger verbunden sein kann. Zweckmäßig ist dieser Lenker so angeordnet, daß er unter den auftretenden Gewichtskräften auf Zug beansprucht wird und daher sehr schwach dimensioniert werden kann.

Die unmittelbare Verbindung des zuletzt genannten Lenkers bzw. des getriebenen Getriebegliedes des Untersetzungsgetriebes mit dem Verstellträger ist vor allem dann auf einfache Weise möglich, wenn der Verstellträger selbst nicht, wie auch denkbar, verschiebbar, sondern auf einer Bogenbahn, nämlich über einen Bogenwinkel von weniger als 90°, insbesondere etwa 55 bis 60°, schwenkbar gelagert ist.

Es ist zwar denkbar, den Mähwerkzeug-Antrieb, beispielsweise den Rasenmäher-Motor gegenüber dem Chassis bzw. dem Fahrgestell höhenverstellbar anzuordnen, jedoch ergibt sich eine besonders einfache Anordnung, wenn stattdessen oder ggf. zusätzlich hierzu der jeweilige Läufer bzw. alle Läufer mit der Höhen-Verstelleinrichtung gegenüber dem Fahrgestell verstellbar gelagert sind. Weist das Fahrgestell vier Laufräder auf zwei hintereinanderliegenden Radachsen auf, so wirkt die Handhabe bzw. das Untersetzungsgetriebe zweckmäßig unmittelbar nur auf eine, insbesondere die hintere, dieser Radachsen, während die vordere Radachse oder Radachsen an Verstellträgern vorgesehen sind, die über einen Übertragungstrieb mit der anderen Radachse bzw. deren zugehörigen Verstellträger verbunden sind. Dieser Übertragungstrieb kann durch einen einfachen, etwa in Fahrtrichtung des Fahrgestelles liegenden einzigen Übertragungslenker gebildet sein.

Es ist denkbar, daß das Untersetzungsgetriebe zwei oder mehr Getriebestufen mit kämmend ineinandergreifenden Getriebegliedern aufweist, jedoch wird eine einzige derartige Getriebestufe bevorzugt, die zweckmäßig über einen einstufigen Lenkertrieb mit zwei im Winkel zueinanderliegenden Lenkern mit dem zugehörigen Verstellträger antriebsverbunden ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: einen erfindungsgemäßen Rasenmäher in Seitenansicht,
- Fig. 2: einen Teil des Rasenmähers gemäß Fig. 1 in Draufsicht und vergrößerter Darstellung,
- Fig. 3: einen Ausschnitt der Fig. 1 in vergrößerter Darstellung und teilweise im Schnitt,
- Fig. 4: einen Teil der Höhen-Verstelleinrichtung sowie der Höhen-Anzeigeeinrichtung des Rasenmähers gemäß den Figuren 1 bis 3 in explodierter Darstellung und im Axialschnitt,
- Fig. 5: das Anzeigeorgan gemäß Fig. 4 in ausschnittsweiser Ansicht und
- Fig. 6: die Anzeigeplatte gemäß Fig. 4 in Draufsicht.

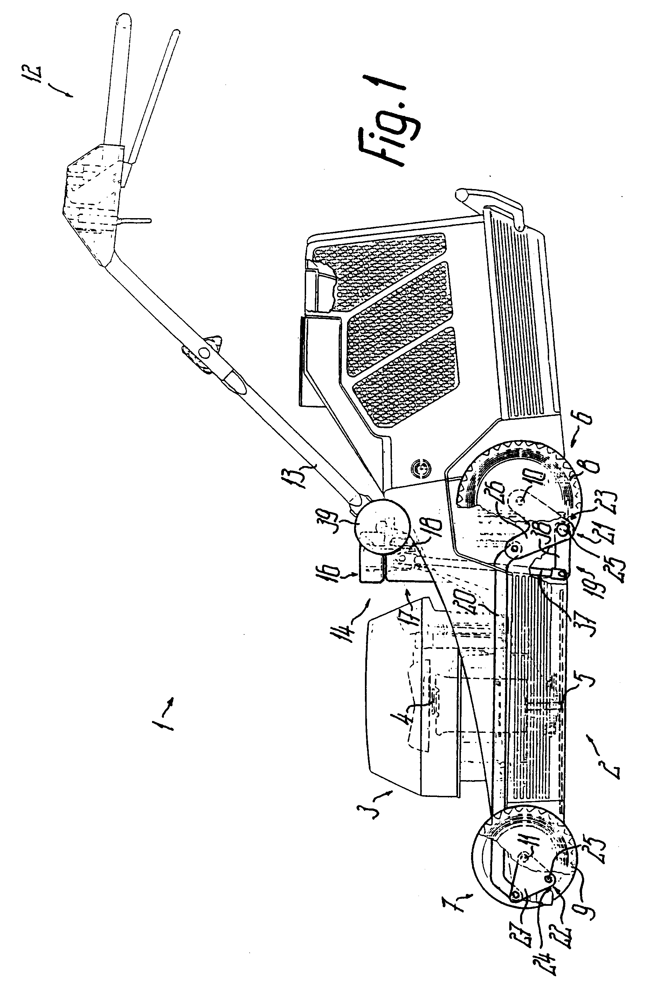

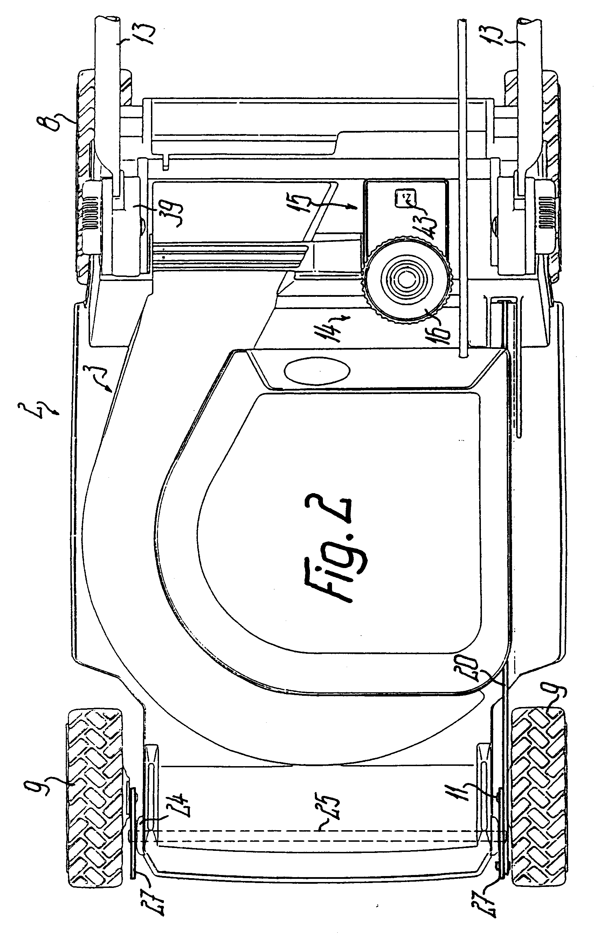

Der Rasenmäher 1 gemäß den Figuren 1 bis 6 weist ein verhältnismäßig flaches, zum hinteren Ende ansteigendes Chassis bzw. Fahrgestell 2 auf, das im wesentlichen im Zentrum mit einem Mähwerkzeug-Antrieb 3 versehen ist. Dieser weist in einem nach oben über das Fahrgestell 2 vorstehenden Gehäuse einen fest gegenüber dem Fahrgestell 2 verflanschten Rasenmäher-Motor 4 in Form beispielsweise eines Elektromotors auf, dessen nach unten vorstehende Motorwelle unmittelbar die zur Laufebene annähernd rechtwinklige Mähwelle 5 bildet. Diese ist mit einem Flansch zur auswechselbaren Befestigung des rotierend anzutreibenden Mähwerkzeuges versehen.

Zur Bodenabstützung weist das Fahrgestell 2 hintere und vordere Läufer 6, 7 auf, die durch zwei hintere, hinter dem Antrieb 3 und zwei vordere, vor dem Antrieb 3 liegende Laufräder 8, 9 bildet sind. Die hinteren und vorderen Laufräder 8, 9 liegen in seitlichen Ausschnitten des Fahrgestelles 2 jeweils paarweise in etwa gleicher Spur, so daß ihre äußeren Stirnflächen etwa in der Ebene der jeweils zugehörigen Seitenbegrenzung des Fahrgestelles 2 liegen, wobei jedoch die vorderen Laufräder 9 geringfügig kleineren Durchmesser aufweisen können und über die Oberseite des nach vorne in der Höhe abfallenden Fahrgestelles 2 vorstehen. Die hinteren Laufräder 8 sind in einer gemeinsamen Radachse 10 und die vorderen Laufräder 9 in der gemeinsamen Radachse 11 angeordnet.

Oberhalb der hinteren Laufräder 8 ist an der Oberseite und im Bereich des hinteren Endes des Fahrgestelles 2, jedoch geringfügig gegenüber der Radachse 10 nach vorne versetzt, ein bügelförmiger Fahrgriff 12 um eine zu den zueinander parallelen Laufradachsen ebenfalls parallele Griffachse schwenkbar angelenkt. Der Fahrgriff 12, der von seiner Anlenkung schräg nach hinten ansteigende Schenkel 13 aufweist, die in ihrem oberen Bereich annähernd horizontal nach hinten abgewinkelt sind, weist am hinteren Ende eine die Schenkel 13 verbindende Griffquerstange auf. Mit den unteren Enden der Schenkel 13 ist der Fahrgriff 12 oberhalb der hinteren Laufräder 8 in gesonderten seitlichen Anlenklagern 39 am Fahrgestell 2 bzw. dem mit diesem starr verbundenen Mähergehäuse gelagert. An die Rückseite des Fahrgestelles 2 kann abnehmbar ein nur in Fig. 1 erkennbarer Sammelbehälter für das Mähgut angesetzt werden, der frei nach hinten vorsteht und unterhalb der Schenkel 13 liegt.

Zur Höhenverstellung des Mähwerkzeuges gegenüber der Laufebene ist eine Höhen-Verstelleinrichtung 14 vorgesehen, mit welcher sämtliche Laufräder 8, 9 gemeinsam und im wesentlichen um gleiche Beträge gegenüber dem Fahrgestell abgesenkt bzw. angehoben werden können, wobei die jeweilige Höhenlage des Mähwerkzeuges durch eine Höhen-Anzeigeeinrichtung 15 optisch angezeigt wird. Eine Einstell-Handhabe 16 zur manuellen Betätigung der Höhen-Verstelleinrichtung 14 liegt mit zur Laufebene rechtwinkliger Drehachse an der Oberseite des Mähergehäuses hinter dem Motor 4 bzw. dessen Gehäuse, wobei die Handhabe 16 etwa in Höhe der Oberseite dieses Gehäuses vorgesehen ist und gegenüber der Mitte der Breite des Rasenmähers seitlich versetzt zwischen den Anlenklagern 39 von hinten und von der Seite leicht zugänglich liegt.

Die Einstell-Handhabe 16 ist mit einer Außenweite von über 50 mm, vorzugsweise in der Größenordnung von etwa 80 mm, so groß gewählt, daß sie gerade gut in eine Handfläche paßt und daher mit einer Hand eine verhältnismäßig große Drehkraft auf sie bequem übertragen werden kann.

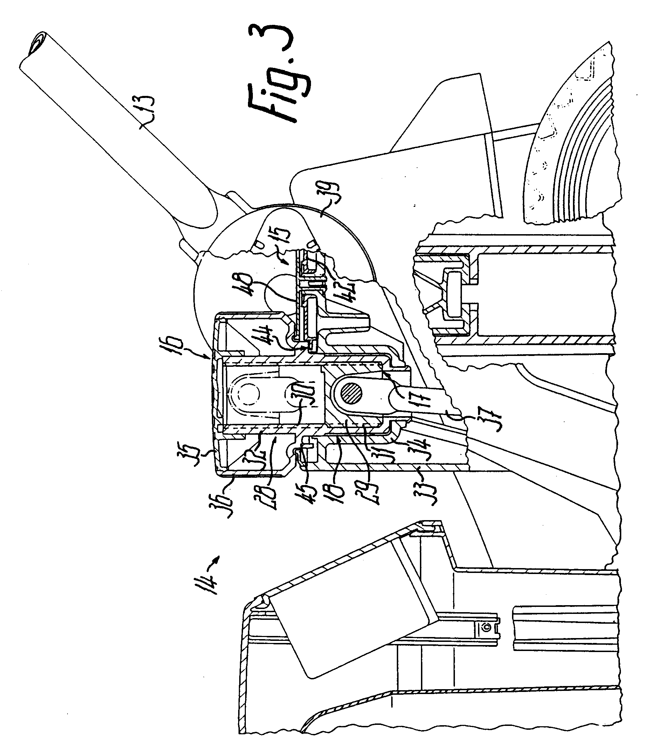

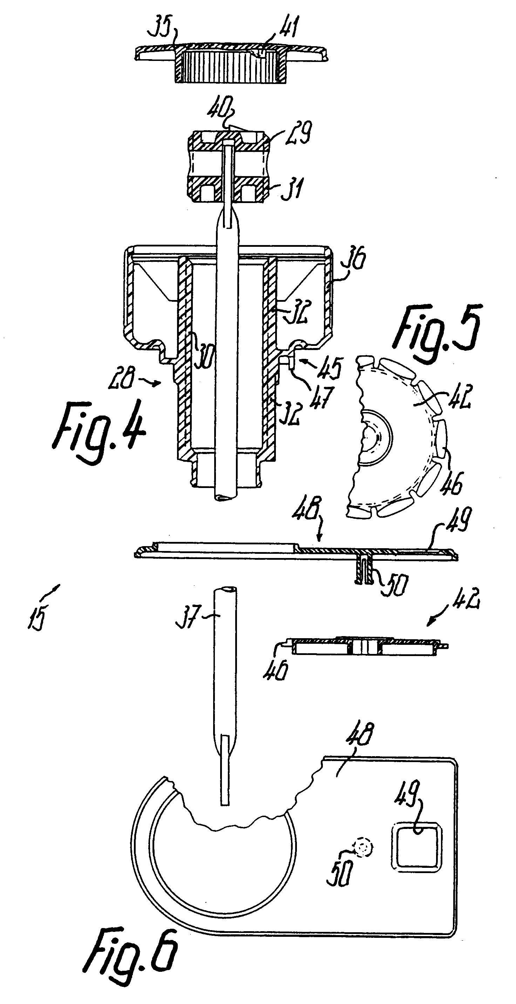

Wie insbesondere die Figuren 3 und 4 zeigen, weist die Höhen-Verstelleinrichtung 14 ein in der Drehachse der Einstell-Handhabe 16 liegendes Untersetzungsgetriebe 17 mit einer einzigen Getriebestufe 18 auf, deren Übersetzungsverhältnis durch die beispielsweise etwa 5 mm betragende Steigung eines vorzugsweise nach Art eines Sägezahngewindes ausgebildeten Spindelgewindes bestimmt ist, dessen weniger geneigte Wendelflanken zur Abstützung des Gewichtsdruckes dienen. Diese, unmittelbar im Bereich der Einstell-Handhabe 16 liegende bzw. in diese annähernd bis zu ihrer Oberseite hineinragende, im wesentlichen vollständig an der Oberseite des Mähergehäuses liegende Getriebestufe 18 ist über einen von ihr nach unten führenden Lenkertrieb 19 mit einem ersten von zwei Verstellträgern 21 verbunden, welcher die hinteren Laufräder 8 bzw. deren beide gesonderte Radlagerungen trägt. Ein vorderer, entsprechender Verstellträger 22 für die vorderen Laufräder 9 ist mit dem hinteren Verstellträger 21 über einen Übertragungstrieb zwangsgekoppelt.

Der hintere Verstellträger 21 ist etwa in Höhe der Unterseite des Fahrgestelles 2 bzw. etwa in Höhe des Mähwerkzeuges in Verstellträgerlagerungen 23 um eine zu den Radachsen 10, 11 parallele Achse mit einer Trägerwelle 25 gelagert, die in jeder Höheneinstellung im wesentlichen unterhalb der Laufradachse 10 und gegenüber dieser geringfügig nach vorne versetzt liegt sowie zwischen den einander zugekehrten Innenseiten des hinteren Laufräder 8 vorgesehen ist. Diese Trägerwelle 25 trägt an beiden Enden im wesentlichen starre, jedoch um ihre Achse ggf. justierbar verbundene, annähernd V- sowie plattenförmige Trägerwangen 26, die unmittelbar benachbart zu den einander zugekehrten Innenseiten der hinteren Laufräder 8 vorgesehen sind und jeweils am hinteren, im wesentlichen in jeder Stellung nach oben bzw. schräg nach hinten weisenden V-Schenkel die Radlagerungen für das zugehörige Laufrad 8 aufweisen. Die Trägerwelle 25 liegt in den V-Spitzen der beiden Trägerwangen 26.

Der vordere Verstellträger 22 weist eine entsprechende, zu den Radachsen 10, 11 und zur hinteren Trägerwelle parallele Trägerwelle 25 auf, die ebenfalls annähernd über die Breite des Fahrgestelles 2 zwischen den beiden vorderen Laufrädern 9 durchgeht, jedoch zweckmäßig geringfügig höher als die hintere Trägerwelle derart liegt, daß sie bei höchster Einstellung des Mähwerkzeuges geringfügig oberhalb der zugehörigen Radachse 11 vorgesehen sein kann. Diese Trägerwelle 25, deren Abstand von der in jeder Höheneinstellung dahinter liegenden Radachse 11 entsprechend dem kleineren Durchmesser der Laufräder 9 geringfügig kleiner als der entsprechende Abstand der hinteren Trägerwelle von der zugehörigen Radachse 10 ist, ist ebenfalls in seitlich im Bereich der Seitenbegrenzungen der Radausschnitte liegenden Verstellträgerlagerungen 24 drehbar gelagert und ist an beiden Enden jeweils mit einer im wesentlichen dreieckförmigen Trägerwange 27 im Bereich einer Dreieckspitze drehfest verbunden, die im Bereich einer weiteren Dreieckspitze die Radlagerungen für das zugehörige Laufrad 9 aufweist.

Der Übertragungstrieb 20 liegt entsprechend dem Untersetzungsgetriebe 17, jedoch weiter als dieses seitlich gegenüber der Mitte der Breite des Fahrgestelles 2 versetzt und verbindet nur zwei seitliche, in Laufrichtung etwa in einer gemeinsamen Ebene hintereinanderliegende Trägerwangen 26, 27. Der Übertragungstrieb 20 ist durch einen durchgehend einteiligen, über den größten Teil seiner Länge zur Laufebene annähernd parallelen Lenker gebildet, dessen vorderes, stumpfwinklig nach unten abgewinkeltes Ende im Bereich der dritten Dreieckspitze an der vorderen Trägerwange 27 und dessen hinteres, ebenfalls stumpfwinklig nach unten abgewinkeltes Ende im Bereich des nach oben ragenden Endes des vorderen V-Schenkels der hinteren Trägerwange 26 angelenkt ist. Die Enden des Übertragungstriebes 20 können dabei flach an den Außenseiten der zugehörigen Trägerwangen 26, 27 jeweils zwischen diesen und der Innenseite des zugehörigen Laufrades 8 bzw. 9 liegen. Es ist auch denkbar, den Übertragungstrieb 20 zum Zwecke der Justierung beispielsweise teleskopartig lägenveränderbar und im jeweiligen Einstellzustand feststellbar auszubilden.

In der niedersten Höheneinstellung des Mähwerkzeuges liegen die hintere Anlenkstelle des Übertragungstriebes 20 und die hintere Radachse 10 etwa in gleicher Höhe symmetrisch beiderseits einer zur Laufebene rechtwinkligen Axialebene der hinteren Trägerwelle 25, wobei der entsprechende, spitzwinklige V-Winkel in der Größenordnung von 60° liegt, vorzugsweise geringfügig kleiner ist. In der höchsten Einstellung des Mähwerkzeuges ist die hintere Trägerwelle 25 demgegenüber etwa um 55° derart verdreht, daß die hintere Anlenkachse des Übertragungstriebes 20 annähernd in gleicher Höhe, jedoch geringfügig hinter der hinteren Trägerwelle 25, liegt, während sich die hintere Radachse 10 annähernd in Höhe der Unterseite des Fahrgestelles 2 bzw. des Mähwerkzeuges befindet. Der Drehwinkel der hinteren Trägerwelle 25 zwischen diesen beiden Endstellungen ist mit etwa 45° gegenüber dem zugehörigen V-Winkel kleiner. Entsprechendes gilt auch für die der vorderen Trägerwelle 25 zugehörigen Anlenk- und Lagerachsen, wobei jedoch hier der entsprechende V-Winkel mit etwa 70° und der maximale Schwenkwinkel mit etwa 60° gegenüber der hinteren Trägerwelle 25 um etwa ein Fünftel bzw. ein Drittel größer sind.

In der tiefsten Höheneinstellung des Mähwerkzeuges liegt die Anlenkstelle des vorderen Endes des Übertragungsgliedes geringfügig höher als dessen hintere Anlenkstelle über der Laufebene bzw. über der zugehörigen Radachse 11 und vor dieser bzw. vor der zugehörigen Trägerwelle 25, während in der höchsten Einstellung des Mähwerkzeuges die vordere Anlenkstelle des Übertragungstriebes 20 geringfügig hinter der zugehörigen Trägerwelle 25 und in etwa gleicher Höhenlage wie in der anderen Endstellung liegt. Der Übertragungstrieb 20 kann im wesentlichen innerhalb des Mähergehäuses oder seitlich unmittelbar benachbart zum Motorgehäuse oberhalb desjenigen untersten Gehäuseteiles liegen, der für die abgeschirmte Aufnahme des Mähwerkzeuges dient. In diesem Fall kann er wenigstens auf einem Teil seiner Länge seitlich außen von einem Gehäusesteg des Mähergehäuses abgeschirmt sein. Durch die beschriebene Ausbildung der Radlageranordnungen und des Übertragungstriebes ergeben sich günstige Kräftverhältnisse, wobei der als Flachprofilstab ausgebildete Übertragungstrieb praktisch nur auf Zug belastet wird.

Das Untersetzungsgetriebe 17 weist ein drehfest mit der Einstell-Handhabe 16 verbundenes treibendes Getriebeglied 28 und ein koaxial in diesem liegendes getriebenes Getriebeglied 29 auf, welches über den Lenkertrieb 19 unmittelbar mit der hinteren Trägerwelle 25 verbunden ist, wobei das Übersetzungsverhältnis für die maximale Höhenverstellung von etwa 50 mm so gewählt ist, daß hierfür etwa zehn Umdrehungen der Einstell-Handhabe 16 benötigt werden, das getriebene Getriebeglied 29 jedoch annähernd den gleichen Axialweg von beispielsweise etwa 50 mm ausführt. Das treibende Getriebeglied 28 ist im wesentlichen durch einen Hülsenkörper 32 gebildet, der am Innenumfang annähernd über seine gesamte Länge mit einer durch das beschriebene Gewinde gebildeten Getriebe-Steigungswenel 30 versehen ist. Das gegenüber dem Hülsenkörper 32 kürzere, getriebene Getriebeglied 29 ist nach Art eines Kolbenhemdes eines Verbrennungsmotors als kurzer Zylinderkörper ausgebildet, dessen Axialerstreckung in der Größenordnung seines Durchmessers liegt und der am Außenumfang in Form eines Außengewindes mit einer in das Innengewinde des Hülsenkörpers 32 kämmend eingreifenden Getriebe-Steigungswendel 30 annähernd über seine ganze Länge versehen ist.

Das Fahrgestell 2 bzw. das Mähergehäuse bildet für die Aufnahme des Untersetzungsgetriebes 17 in Form eines nach oben vorstehenden Ansatzes ein Chassis-Gehäuse 33 für das Untersetzungsgetriebe 17, von dessen oberer Stirnwand eine in ihm liegende, napfförmige Lagermuffe 34 nach unten vorsteht, die einteilig mit dem Chassis-Gehäuse 33 ausgebildet ist. Der ebenfalls napfartige Hülsenkörper 32 weist an seinem durchbrochenen Napfboden einen die zugehörige Bodenöffnung begrenzenden, ringförmigen Einsprengansatz auf, der in die Bodenöffnung der ebenfalls durchbrochenen Bodenwand der Lagermuffe 34 im wesentlichen spielfrei eingreift und diese an der Außenseite mit hakenartigen Vorsprüngen zur Axialsicherung hintergreift. Der mit der Außenseite seiner Bodenwand an der Innenseite der Bodenwand der Lagermuffe 34 axial abgestützte und innerhalb der Lagermuffe 34 im wesentlichen radialspielfrei anliegende Hülsenkörper 32 greift nur mit einem Teil seiner Länge in die Lagermuffe 34 ein, während sein übriger, etwa gleich langer Teil nach oben bzw. aus der offenen Seite über die Lagermuffe 34 bzw. das Chassis-Gehäuse 33 vorsteht.

An diesem vorstehenden Teil ist der Hülsenkörper 32 unmittelbar einteilig mit einem über seinen Außenumfang vorstehenden, napfförmig hohlen Drehkopf 36 versehen, dessen Stirnwand benachbart zur genannten Stirnwand des Chassis-Gehäuses 33 liegt und der den Mantel der Einstell-Handhabe 16 bildet. Das vom Chassis-Gehäuse 33 bzw. von den Bodenwänden des Hülsenkörpers 32 und der Lagermuffe 34 abgekehrte offene Ende des Drehkopfes 36, das geringfügig über das zugehörige Ende des Hülsenkörpers 32 vorsteht, ist mit einem annähernd scheibenförmigen Kappendeckel 35 verschlossen, welcher in den Innenumfang des Drehkopfes 36 eingesprengt ist und im Zentrum einen den Hülsenkörper 32 am Außenumfang umgreifenden inneren Flanschansatz aufweist, so daß der vorstehende Teil des Hülsenkörpers 32 und der Drehkopf 36 unmittelbar gegeneinander zentriert abgestützt sind.

Vor Aufsetzen des Kappendeckels 35 kann das Getriebeglied 29 durch das zugehörige offene Ende in das Getriebeglied 28 eingeschraubt werden. In seiner der tiefsten Höheneinstellung des Mähwerkzeuges entsprechenden Stellung ist das Getriebeglied 29 durch Axialanschlag seiner zugehörigen Stirnfläche an der ringschulterförmigen Bodenwand des Hülsenkörpers 32 festgelegt. In der anderen Endstellung des Getriebegliedes 29 ist ein solcher Axialanschlag nicht vorgesehen, um ein versehentliches Absprengen des Kappendeckels 35 unter den auftretenden Anschlagkräften zu vermeiden. Vielmehr weist das Getriebeglied 29 an seiner zugehörigen Stirnseite in Nähe des Außenumfanges mindestens einen keilförmig begrenzten, nach oben vorstehenden Anschlag 40 mit einer etwa in einer Axialebene des Getriebegliedes 29 liegenden Anschlagfläche auf, der axial über die Stirnfläche des Getriebegliedes 29 um ein Maß vorsteht, das kleiner als die Steigung bzw. die Hälfte der Steigung der Steigungswendeln 30, 31 ist. Diesem Anschlag 40 ist als Gegenanschlag 41 ein entsprechender, keilförmig begrenzter und innerhalb des Ringflansches liegender Vorsprung an der Innenseite der Stirnwand des Kappendeckels 35 zugeordnet.

Die Steigungswendeln 30, 31 sind so aufeinander abgestimmt, daß der Anschlag 40 bei der entsprechenden Axialbewegung des Getriebegliedes 29 in den Drehweg des Gegenanschlages 41 gelangt ist, bevor der Anschlag 40 und der Gegenanschlag 41 die zur Anschlagberührung übereinstimmende relative Drehlage erreicht haben, wobei die Anschlagberührung erfolgt, bevor das Getriebeglied 29 axial an dem Kappendeckel 35 anschlägt. Dadurch entstehen bei der zugehörigen Anschlagbegrenzung des Getriebegliedes 29 als Anschlagkräfte nur Drehkräfte, die auf den Kappendeckel 35 wirken. Durch die Anschlagbegrenzung eventuell auftretende Überlastungen können dann nach Art einer Sicherheits-Rutschkupplung durch die reibschlüssige Schnappverbindung des Kappendeckels 35 mit dem Drehkopf 36 aufgefangen werden, da die zur Betätigung aufgebrachten manuellen Kräfte in der Hauptsache an dessen Mantel angreifen. Ein entsprechender Drehanschlag wäre auch zur Anschlagbegrenzung der anderen bzw. unteren Endstellung des Getriebegliedes 29 denkbar.

Das Lenkergetrieb 19 ist im wesentlichen ausschließlich durch einen Zuglenker 37 und einen Wellenarm 38 der hinteren Trägerwelle 25 gebildet. Der, beispielsweise aus einem Rohrprofil mit flachgequetschten Anlenkenden hergestellte Zuglenker 37 steht in der höchsten Einstellung des Mähwerkzeuges annähernd rechtwinklig zur Laufebene bzw. achsgleich zum Untersetzungsgetriebe 17, während er bei der tiefsten Höheneinstellung unter wenigen Winkelgraden nach hinten geneigt ist. Das Getriebeglied 29 weist in seiner zugehörigen Stirnseite eine taschen- bzw. schlitzförmige und annähernd bis zur anderen Stirnfläche reichende Ausnehmung auf, welche rechtwinklig zu ihrer Mittelebene von einer das Getriebeglied 29 durchsetzenden Diametralbohrung in Nähe ihrer Bodenfläche durchsetzt wird und zur gelenkigen Aufnahme des zugehörigen Anlenkendes des Zuglenkers 37 dient. In eine mit der Diametralbohrung des Getriebegliedes 29 fluchtende Bohrung dieses Anlenkendes ist nach Art eines Kolbenbolzens ein im Getriebeglied 29 verankerter Gelenkbolzen eingesetzt, durch welchen der Zuglenker 37 gegenüber dem Getriebeglied 29 um eine zur Trägerwelle 25 parallele Achse schwenkbar gelagert ist. Durch diesen Gelenkbolzen ist auch gleichzeitig das Getriebeglied 29 über den mit dem Wellenarm 38 verbundenen Zuglenker 37 gegenüber dem Fahrgestell verdrehgesichert, so daß es mit dem Getriebeglied 28 nicht mitdreht, wobei diese Verdrehsicherung eine gewisse, elastisch rückfedernde Elastizität hat, da hierbei der durchgehend geradlinige Zuglenker 37 im wesentlichen auf Torsion beansprucht wird.

Das vom Untersetzungsgetriebe 17 entfernt liegende untere Anlenkende des Zuglenkers 37 ist über einen Gelenkbolzen am freien Ende des Wellenarmes 38 um eine zur Trägerwelle 25 parallele Achse gelenkig angelenkt, wobei der Wellenarm 38 radial nach vorne vorstehend zwischen den Trägerwangen 26 an der hinteren Trägerwelle 25 befestigt ist, in tiefster Höheneinstellung des Mähwerkzeuges etwa parallel zur Laufebene nach vorne vorsteht und in höchster Höheneinstellung demgegenüber spitzwinklig schräg nach oben ansteigt. Die wirksame Hebelarmlänge des Wellenarmes 38 liegt etwa in der Größenordnung des Achsabstandes zwischen der hinteren Trägerwelle 25 und der zugehörigen Radachse 10 bzw. des demgegenüber etwa gleichen Abstandes der zugehörigen Anlenkstelle des Übertragungstriebes 20, wobei die wirksame Hebellänge des Wellenarmes 38 demgegenüber geringfügig kleiner sein kann. Im Falle der vorderen Trägerwelle 25 ist deren Achsabstand zur Radachse 11 kleiner als ihr Achsabstand zur zugehörigen Anlenkstelle des Übertragungstriebes 20. Der Zuglenker 37 durchsetzt die offenen Bodenwandungen des Hülsenkörpers 32 und der Lagermuffe 34, deren Durchbrüche relativ eng an den Querschnitt des Zuglenkers 37 angepaßt sind.

Die Höhen-Anzeigeeinrichtung 15 weist ein kreisscheibenbzw. zahnradförmiges flaches Anzeigeorgan 42 auf, das benachbart zu seinem Außenumfang, jedoch innerhalb einer am Außenumfang vorgesehenen Zahnung, über den Umfang verteilte Höhenbezeichnungen 43 trägt und über ein Schrittschaltwerk 44 unmittelbar vom Untersetzungsgetriebe 17, und zwar von dessen treibendem Getriebeglied 28, nämlich der Einstell-Handhabe 16, angetrieben wird. Das achsparallel neben dem Untersetzungsgetriebe 17 und unmittelbar hinter der Handhabe zwischen den Anlenklagern 39 etwa in Höhe der Unterseite der Handhabe 16 liegende Anzeigeorgan 42 wird über ein Stellglied 45 angetrieben, welches einteilig mit der Bodenwand des napfförmigen Drehkopfes 36 bzw. mit dem Hülsenkörper 32 ausgebildet ist und über die genannte, ringförmige Bodenwand in das Chassis-Gehäuse 33 annähernd bis zu dessen geringfügig zurückversetzten Stirnwand vorsteht.

Dem Stellglied ist am Anzeigeorgan 42 die beispielsweise etwa zwölfteilige Zahnung 46 mit verhältnismäßig breiten Zähnen und schmalen, axialschlitzförmigen Zahnlücken zugeordnet, die an einen einzigen, axialstiftförmigen Mitnehmer 47 des Stellgliedes 45 angepaßt sind. Bei jeder vollen Drehung taucht dieser Mitnehmer 47 einmal in eine Zahnlücke des Anzeigeorganes 42 ein und dreht dieses um eine Zahnteilung weiter, wonach der Mitnehmer 37 wieder aus der Zahnlücke heraustaucht. In der jeweiligen Anzeigestellung kann das Anzeigeorgan 42 durch eine geeignete Federrast gegen versehentliche Verdrehung kraftschlüssig gesichert sein.

Das Anzeigeorgan 42 ist mit einer Nabe an der Innenseite einer Anzeigeplatte 48 um einen einteilig von dieser abstehenden, federnd spreizbaren Lagerzapfen 50 drehbar gelagert und liegt zwischen der Stirnwand des Chassis-Gehäuses 33 und dieser Anzeigeplatte 48. Die Anzeigeplatte 48 wird in einem eng angepaßten Durchbruch im Bereich der Bodenwand des Drehkopfes 36 von dem Getriebeglied 28 durchsetzt und deckt das Anzeigeorgan 42 im wesentlichen vollständig bis auf ein durch einen fensterartigen Ausschnitt gebildetes Anzeigefeld 49 ab, das sich auf der von der Einstell-Handhabe 16 abgekehrten Seite des Lagerzapfens 50 befindet. In diesem Anzeigefeld 49 erscheint an der Oberseite der Höhen-Anzeigeeinrichtung 15 jeweils eine der Höhenbezeichnungen 43.

Die Anzeigeplatte 48 ist im dargestellten Ausführungsbeispiel mit ihrem Lagerzapfen 50 nach Art einer Schnappverbindung in einem Muffenansatz der Stirnwand des Chassis-Gehäuses 33 lagegesichert, wobei das Anzeigeorgan 42 mit seiner Nabe auf dem Außenumfang dieses Muffenansatzes drehbar gelagert ist. Die Anzeigeplatte 48 verschließt außerdem nach Art eines Deckels den durch die zurückversetzte Stirnwand des Chassis-Gehäuses 33 gebildeten Aufnahmeraum für das Schrittschaltwerk 44 dadurch, daß sie mit einem abgewinkelten Rand in eine Endschulter des über diese Stirnwand vorstehenden Teiles des Mantels des Gehäuses 33 eingreift. Der genannte Aufnahmeraum kann mit einer in der Stirnwand vorgesehenen Ablauföffnung für eingedrungenes Wasser versehen sein.

## Patentansprüche

1. Rasenmäher mit einem Fahrgestell (2), einer Aufnahme für ein Mähwerkzeug und mindestens einer Verstelleinrichtung (14) zur gegenseitigen Verstellung wenigstens eines Teiles des Fahrgestelles und der Aufnahme über ein Übertragungsorgan (37), wobei wenigstens eine Anzeigeeinrichtung (15) vorgesehen ist, die mit mindestens einer Einstell-Handhabe (16) anzutreiben und insbesondere mit wenigstens einer Verstelleinrichtung (14) gekuppelt ist, dadurch gekennzeichnet, daß eine Anzeigeeinrichtung (15) unter Umgehung des Übertragungsorganes (37) unmittelbar von einer Einstell-Handhabe (16) angetrieben ist.

2. Rasenmäher nach Anspruch 1, dadurch gekennzeichnet, daß eine Anzeigeeinrichtung (15) mit einer Verstelleinrichtung (14) mitlaufend gekuppelt ist, daß insbesondere für die Anzeigeeinrichtung (15) und die Verstelleinrichtung (14) eine gemeinsame Handhabe (16) vorgesehen ist und daß vorzugsweise die Anzeigeeinrichtung (15) als Höhen-Anzeigeeinrichtung und/oder die Verstelleinrichtung (14) als Höhen-Verstelleinrichtung ausgebildet ist.

3. Rasenmäher nach Anspruch 1 oder 2, dadurch gekennzeichnet, daß ein Anzeigeorgan (42) einer Anzeigeeinrichtung (15), insbesondere eine über den Umfang mit Höhenbezeichnungen (43) versehene Anzeigescheibe, unmittelbar von einem treibenden Stellglied (45) einer Verstelleinrichtung (14) angetrieben ist, das vorzugsweise an einer Handhabe (16) vorgesehen ist.

4. Rasenmäher nach einem der vorhergehenden Ansprüche, dadurch gekennzeichnet, daß ein Anzeigeorgan (42) einer Anzeigeeinrichtung (15) über ein Schrittschaltwerk (44) insbesondere derart mit der Verstelleinrichtung (14) antriebsverbunden ist, daß je voller Drehung des treibenden Stellgliedes (45) mindestens ein Schaltschritt des Anzeigeorganes (42) vorgesehen ist, das vorzugsweise über den gesamten Stellweg höchstens eine volle Drehung ausführt.

5. Rasenmäher nach einem der vorhergehenden Ansprüche, dadurch gekennzeichnet, daß ein Anzeigeorgan (42) eine im Drehweg mindestens eines Mitnehmers (47) einer Handhabe (16) liegende Zahnung (46) aufweist und vorzugsweise im wesentlichen nur im Bereich eines fensterartigen Anzeigefeldes (49) benachbart zur Handhabe (16) frei liegt.

6. Rasenmäher nach einem der vorhergehenden Ansprüche, dadurch gekennzeichnet, daß zwischen einem Stellteil (21 bzw. 22) und einer Handhabe (16), insbesondere näher bei dieser, ein mindestens einstufiges Untersetzungsgetriebe (17) vorgesehen ist, daß vorzugsweise eine Getriebestufe (18) des Untersetzungsgetriebes (17) gegeneinander drehbar gelagerte, kämmend ineinandergreifende Getriebeglieder (28, 29) aufweist, von denen insbesondere wenigstens eines mit einer Getriebe-Steigungswendel (30, 31) versehen ist und daß vorzugsweise eine Getriebestufe (18) des Untersetzungsgetriebes (17) einen Spindeltrieb, insbesondere einen Gewindespindeltrieb mit koaxial zueinander und/oder zur Handhabe (16) liegenden Getriebegliedern (28, 29) aufweist.

7. Rasenmäher nach einem der vorhergehenden Ansprüche, dadurch gekennzeichnet, daß eine Getriebestufe (18) eines Untersetzungsgetriebes (17) einer Verstelleinrichtung (14) ein in einem zylinderartigen Getriebeglied (28) axial bewegbares kolbenartiges Getriebeglied (29) aufweist und daß die Getriebeglieder (28, 29) insbesondere mit einem Innen- und einem Außengewinde ineinandergreifen, wobei vorzugsweise das Untersetzungsgetriebe (17) nur eine einzige Getriebestufe (18) mit kämmend ineinandergreifenden Getriebegliedern (28, 29) aufweist, die insbesondere über einen einstufigen, vorzugsweise das Übertragungsorgan (37) aufweisenden Lenkertrieb (19) mit mindestens einem Stellteil (21) antriebsverbunden ist.

8. Rasenmäher nach einem der vorhergehenden Ansprüche, dadurch gekennzeichnet, daß mindestens ein Ende des Stellweges einer Verstelleinrichtung durch unmittel-bare gegenseitige Anschlagbegrenzung von Getriebegliedern (28, 29) einer Getriebestufe (18) eines Untersetzungsgetriebes (17) begrenzt ist, wobei vorzugsweise ein stirnseitiger Anschlag (40) eines Getriebegliedes (29) gegen Ende des Stellweges im Drehweg eines Gegenanschlages (41) des anderen Getriebegliedes (28) liegt.

9. Rasenmäher nach einem der vorhergehenden Ansprüche, dadurch gekennzeichnet, daß ein treibendes Getriebeglied (28) einer Getriebestufe (18) eines Untersetzungsgetriebes (17) einer Verstelleinrichtung (14) unmittelbar und insbesondere hinsichtlich dessen Getriebebewegung im wesentlichen starr mit einer Handhabe (16) verbunden ist, daß insbesondere ein hülsenförmiges Getriebeglied (28) an einem Ende einen Drehkopf (36) und/oder den Gegenanschlag (41) trägt und im Bereich des anderen Endes unter Bildung eines Axialanschlages für ein innenliegendes getriebenes Getriebeglied (29) einen Durchtritt für eine insbesondere durch das Übertragungsorgan (37) gebildete Getriebeverbindung dieses getriebenen Getriebegliedes (29) mit einem Stellteil (21 bzw. 22) aufweist.

10. Rasenmäher nach einem der vorhergehenden Ansprüche, dadurch gekennzeichnet, daß ein getriebenes Getriebeglied (29) einer Getriebestufe (18) eines Untersetzungsgetriebes (17) einer Verstelleinrichtung (14) über eine wenigstens teilweise als Lenkertrieb (19) ausgebildete Getriebeverbindung mit einem Stellteil (21, 22) verbunden ist, wobei vorzugsweise ein innenliegendes Getriebeglied (29) nach Art einer Pleuelstange einen das Übertragungsorgan (37) bildenden Zuglenker gelenkig trägt, der im Abstand von der Getriebestufe (18) unmittelbar mit einer Trägerwelle (25) antriebsverbunden ist.

11. Rasenmäher nach einem der vorhergehenden Ansprüche, dadurch gekennzeichnet, daß mindestens ein Stellteil (21 bzw. 22) auf einer Bogenbahn schwenkbar gelagert und insbesondere wenigstens ein Stellteil (21, 22) unmittelbar auf mindestens einer Trägerwelle (25) angeordnet ist, daß vorzugsweise im Abstand zueinander liegende, im wesentlichen um achsparallele bzw. achsgleiche Stellteillagerungen (23, 24) schwenkbare Stellteile (21, 22) vorgesehen sind und daß insbesondere in gesonderten Stellteillagerungen (23, 24) gelagerte Stellteile (21, 22) jeweils über einen durch einen Zwischenlenker oder dgl. gebildeten Übertragungstrieb (20) miteinander verbunden sind.

12. Rasenmäher nach einem der vorhergehenden Ansprüche, dadurch gekennzeichnet, daß das Fahrgestell (2) einerseits einen Mähwerkzeug-Antrieb (3), wie eine aufrechte Mähwelle (5), und andererseits zur beweglichen Bodenabstützung mindestens einen Läufer (6, 7), wie Laufräder (8, 9), aufweist, daß vorzugsweise eine Verstelleinrichtung (14) zur gegenseitigen Verstellung des Mähwerkzeug-Antriebes (3) und mindestens eines Läufers (6, 7) über einen Stellweg auf wenigstens einen als Verstellträger ausgebildeten Stellteil (21, 22) wirkt und daß insbesondere das langgestreckte und/oder auf Zug beansprucht angeordnete Übertragungsorgang (37) eines zwischen mindestens einem Stellteil (21, 22) einer Verstelleinrichtung (14) und einer Handhabe (16) vorgesehenen Stelltriebes einen von der Handhabe (16) angetriebenen Abschnitt und einen den jeweiligen Stellteil (21, 22) antreibenden Abschnitt aufweist.

13. Rasenmäher nach einem der vorhergehenden Ansprüche, dadurch gekennzeichnet, daß mindestens eine Bodenabstützung des Rasenmähers gegenüber dem Fahrgestell (2) höhenverstellbar gelagert ist, daß insbesondere zwei in Laufrichtung hintereinander liegende Stellteillagerungen (23, 24) vorgesehen sind, die im wesentlichen unterhalb von Radachsen (10, 11) der Bodenabstützung liegen und über einen seitlich des Mähwerkzeug-Antriebes (3) annähernd parallel zur Laufebene liegenden Übertragungstrieb (20) miteinander sowie über das im wesentlichen aufrechte Übertragungsorgan (37) mit der Getriebestufe (18) des Untersetzungsgetriebes (17) verbunden sind.

14. Rasenmäher nach einem der vorhergehenden Ansprüche, dadurch gekennzeichnet, daß eine Einstell-Handhabe (16) einer Verstelleinrichtung (14) von der Oberseite des Rasenmähers (1) zugänglich im wesentlichen an dessen Oberseite, insbesondere mit aufrechter Drehachse, annähernd zwischen Anlenklagern (39) der Schenkel (13) eines bügelförmigen Fahrgriffes (12) für den Rasenmäher (1) liegt.

## Claims

1. Lawnmower with a chassis (2), a receptacle for a mowing tool and at least one adjusting device (14) for the mutual adjustment of at least one part of the chassis and the receptacle by means of a transmission member (37), at least one indicating device (15) being provided, which is to be driven with at least one setting handle (16) and is in particular coupled to at least one adjusting device (14), characterized in that an indicating device (15) is directly driven by a setting handle (16) whilst bypassing the transmission member (37).

2. Lawnmower according to claim 1, characterized in that an indicating device (15) is coupled in jointly moving manner with an adjusting device (14), that in particular for the indicating device (15) and adjusting device (14) a common handle (16) is provided and that preferably the indicating device (15) is constructed as a height indicating device and/or the adjusting device (14) as a height adjusting device.

3. Lawnmower according to claim 1 or 2, characterized in that an indicating member (42) of an indicating device (15), particularly an indicating disk provided over the circumference with height markings (43), is directly driven by a driving control member (45) of an adjusting device (14), which is preferably provided on a handle (16).

4. Lawnmower according to one of the preceding claims, characterized in that an indicating member (42) of an indicating device (15) is drive-connected by means of a step timing gear (44) with the adjusting device (14) in such a way that per complete revolution of the driving control member (45) there is at least one operating step of the indicating member (42), which preferably at the most performs one complete revolution over the entire control path.

5. Lawnmower according to one of the preceding claims, characterized in that an indicating member (42) has a toothed system (46) located in the rotation path of at least one driver (47) of a handle (16) and preferably is only free substantially in the vicinity of a window-like indicating area (49) adjacent to the handle (16).

6. Lawnmower according to one of the preceding claims, characterized in that between a control part (21 or 22) and a handle (16) and in particular closer to the latter, there is at least one one-stage reduction gear (17), that preferably a gear stage (18) of the reduction gear (17) has meshing gear members (28, 29) mounted so as to rotate against one another and whereof at least one is provided with a gear pitch helix (30, 31) and that preferably a gear stage (18) of the reduction gear (17) has a spindle drive, particularly a threaded spindle drive with gear members (28, 29) arranged coaxially to one another and/or the handle (16).

7. Lawnmower according to one of the preceding claims, characterized in that a gear stage (18) of a reduction gear (17) of an adjusting device (14) has a piston-like gear member (29) axially movable in a cylinder-like gear member (28) and that the gear members (28, 29) mesh in particular with an internal and an external thread and preferably the reduction gear (17) has only one gear stage (18) with meshing gear members (28, 29) and which are in particular drive-connected by means of a one-stage control rod drive (19), preferably having the transmission member (37), with at least one control part (21).

8. Lawnmower according to one of the preceding claims, characterized in that at least one end of the control path of an adjusting device is bounded by directly mutual stop limitation of gear members (28, 29) of a gear stage (18) of a reduction gear (17) and preferably a frontal stop (40) of a gear member (29) is located towards the end of the control path in the rotation path of a counterstop (41) of the other gear member (28).

9. Lawnmower according to one of the preceding claims, characterized in that a driving gear member (28) of a gear stage (18) of a reduction gear (17) of an adjusting device (14) directly and in particular with respect to its gear movement is connected substantially rigidly to a handle (16), that in particular a sleeve-like gear member (28) carries at one end a rotary head (36) and/or the counterstop (41) and in the vicinity of the other end and accompanied by the formation of an axial stop for an inside driven gear member (29) has a passage for a gear connection, more particularly formed by the transmission member (37), of said driven gear member (29) with a control part (21 or 22).

10. Lawnmower according to one of the preceding claims, characterized in that a driven gear member (29) of a gear stage (18) of a reduction gear (17) of an adjusting device (14) is connected by means of a gear connection at least partly constructed as a control rod drive (19) with a control part (21, 22) and preferably an inside gear member (29) in the manner of a connecting rod carries in articulated manner a tension control rod forming the transmission member (37) and which is drive-connected to a carrier shaft (25) spaced from the gear stage (18).

11. Lawnmower according to one of the preceding claims, characterized in that at least one control part (21 or 22) is pivotably mounted on an arcuate path and in particular at least one control part (21, 22) is directly arranged on at least one carrier shaft (25), that preferably spaced control parts (21, 22) pivotable about axially parallel or equiaxial control part bearings (23, 24) are provided and that in particular control parts (21, 22) mounted in separate control part bearings (23, 24) are in each case interconnected by means of a transmission (20) formed by an intermediate control rod or the like.

12. Lawnmower according to one of the preceding claims, characterized in that the chassis (2) has on the one hand a mowing tool drive (3), such as an upright mowing shaft (5), and on the other for movable ground support at least one rotor (6, 7), such as wheels (8, 9), that preferably an adjusting device (14) is used for the reciprocal adjustment of the mowing tool drive (3) and at least one rotor (6, 7) and acts over a control path on at least one control part (21, 22) constructed as adjustment carriers and that in particular the elongated and/or tensile stressed transmission member (37) of a control drive provided between at least one control part (21, 22) of an adjusting device (14) and a handle (16) has a portion driven by the handle (16) and a portion driving the particular control part (21, 22).

13. Lawnmower according to one of the preceding claims, characterized in that at least one ground support of the lawnmower is mounted in height adjustable manner relative to the chassis (2), that in particular there are two control part bearings (23, 24) successively located in the running direction and which are substantially located below the wheel axles (10, 11) of the ground support and are connected to one another by means of a transmission (20) running parallel to the running plane laterally of the mowing tool drive (3) and via the substantially upright transmission member (37) to the gear stage (18) of the reduction gear (17).

14. Lawnmower according to one of the preceding claims, characterized in that a setting handle (16) of an adjusting device (14) accessible from the top of the lawnmower (1) and in particular with an upright rotation axis is located approximately between articulation bearings (39) of the leg (13) of a bow-shaped operating grip (12) for the lawnmower (1).

## Revendications

1. Tondeuse à gazon comprenant un carénage (2), un logement destiné à un outil de tonte et au moins un dispositif (14) pour le réglage mutuel d'au moins une partie du carénage et la communication du réglage par l'intermédiaire d'un organe de transmission (37), dans laquelle au moins un dispositif indicateur (15) est prévu qui doit être actionné à l'aide d'au moins une manette de réglage (16) et est couplé en particulier avec au moins un dispositif de réglage (14), caractérisé en ce qu'un dispositif indicateur (15) est entraîné directement par une manette de réglage (16) par contournement de l'organe de transmission (37).

2. Tondeuse à gazon selon la revendication 1, caractérisée en ce qu'un dispositif indicateur (15) est couplé directement à un dispositif de réglage (14), en ce qu'il est prévu en particulier de pourvoir le dispositif indicateur (15) et le dispositif de réglage (14) d'une manette commune (16) et en ce que le dispositif indicateur (15) est de préférence réalisé sous la forme d'un dispositif indicateur de hauteur et/ou le dispositif de réglage (14) est réalisé sous la forme d'un dispositif de réglage en hauteur.

3. Tondeuse à gazon selon la revendication 1 ou 2, caractérisée en ce qu'un organe indicateur (42) d'un dispositif indicateur (15), en particulier un disque indicateur portant des repères de hauteur (43) sur son pourtour, est directement actionné par une pièce de réglage entraînante (45) d'un dispositif de réglage (14) qui équipe de préférence une manette (16).

4. Tondeuse à gazon selon l'une quelconque des revendications précédentes, caractérisée en ce qu'un organe indicateur (42) d'un dispositif indicateur (15) est relié au dispositif de réglage (14) par un mécanisme pas à pas (44) en particulier de manière telle qu'à chaque rotation complète de la pièce de réglage entraînante (45), l'organe indicateur (42) soit déplacé d'au moins un pas et qu'il accomplisse de préférence tout au plus une rotation complète sur la totalité du parcours de réglage.

5. Tondeuse à gazon selon l'une quelconque des revendications précédentes, caractérisée en ce qu'un organe indicateur (42) comprend une denture (46) située dans le parcours de rotation, sur au moins un entraîneur (47) d'une manette (16) et n'est de préférence apparent en substance qu'au niveau d'une zone d'affichage en forme de fenêtre (49) voisine de la manette (16).

6. Tondeuse à gazon selon l'une quelconque des revendications précédentes, caractérisée en ce qu'un démultiplicateur (17) à un étage au moins est prévu entre un organe de réglage (21 ou 22) et une manette (16), en particulier plus près de celle-ci, en ce que de préférence, un étage de transmission (18) du démultiplicateur (17) comprend des pièces d'engrenage (28, 29) s'engrenant l'une dans l'autre et pivotant l'une par rapport à l'autre, l'une d'entre elles au moins étant munie en particulier d'un filetage hélicoïdal (30, 31), et en ce que de préférence un étage de transmission (18) du démultiplicateur (17) comprend un dispositif à broche, en particulier un dispositif à broche filetée présentant des pièces d'engrenage (28, 29) situées coaxialement l'une par rapport à l'autre et/ou par rapport à la manette (16).

7. Tondeuse à gazon selon l'une quelconque des revendications précédentes, caractérisée en ce qu'un étage de transmission (18) d'un démultiplicateur (17) d'un dispositif de réglage (14) comprend une pièce d'engrenage à type de piston (29) pouvant se déplacer axialement dans une pièce d'engrenage cylindrique (28) et en ce qu'en particulier, les pièces d'engrenage (28, 29) s'engrènent l'une dans l'autre au moyen d'un filetage femelle et d'un filetage mâle, le démultiplicateur (17) ne comprenant de préférence qu'un étage de transmission (18) pourvu de pièces d'engrenage (28, 29) s'engrenant l'une dans l'autre et relié en particulier à au moins un organe de réglage (21) par un dispositif de guidage (19) à un étage comprenant de préférence un organe de transmission (37).

8. Tondeuse à gazon selon l'une quelconque des revendications précédentes, caractérisée en ce qu'au moins une extrémité du parcours de réglage d'un dispositif de réglage est limitée par contact direct et mutuel des butées des pièces d'engrenage (28, 29) d'un étage de transmission (18) d'un démultiplicateur (17), une butée frontale (40) d'une pièce d'engrenage (29) se trouvant de préférence, vers l'extrémité du parcours de réglage, sur le chemin giratoire d'une contre-butée (41) de l'autre pièce d'engrenage (28).

9. Tondeuse à gazon selon l'une quelconque des revendications précédentes, caractérisée en ce qu'une pièce d'engrenage entraînante (28) d'un étage de transmission (18) d'un démultiplicateur (17) d'un dispositif de réglage (14) est reliée directement et autant dire rigidement, en particulier quant à son mouvement d'engrenage, à une manette (16), en ce qu'en particulier, une pièce d'engrenage en forme de douille (28) porte à l'une de ses extrémités une tête pivotante (36) et/ou la contre-butée (41) et présente, au niveau de l'autre extrémité, un passage destiné à une jonction d'engrenage, formée en particulier par l'organe de transmission (37), d'une pièce d'engrenage entraînée interne (29) avec un organe de réglage (21 ou 22), en formant une butée axiale pour cette pièce d'engrenage entraînée (29).

10. Tondeuse à gazon selon l'une quelconque des revendications précédentes, caractérisée en ce qu'une pièce d'engrenage entraînée (29) d'un étage de transmission (18) d'un démultiplicateur (17) d'un dispositif de réglage (14) est reliée à un organe de réglage (21, 22) par une jonction d'engrenage réalisée, au moins en partie, sous la forme d'un dispositif de guidage (19), une pièce d'engrenage interne (29) étant de préférence articulée à la manière d'une bielle à une bielle de traction constituant l'organe de transmission (37) qui est directement reliée à un arbre porteur (25) à distance de l'étage de transmission (18).

11. Tondeuse à gazon selon l'une quelconque des revendications précédentes, caractérisée en ce qu'au moins un organe de réglage (21 ou 22) pivote sur une glissière en arc et en particulier, au moins un organe de réglage (21, 22) est agencé directement sur au moins un arbre porteur (25), en ce que de préférence, des organes de réglage (21, 22) disposés à distance l'un de l'autre et pivotant en substance autour de logements (23, 24) d'axe parallèle ou identique et en ce qu'en particulier, des organes de réglage (21, 22) disposés dans des logements distincts (23, 24) sont reliés entre eux par un moyen de transmission (20) consistant en une bielle intermédiaire ou en une pièce similaire.

12. Tondeuse à gazon selon l'une quelconque des revendications précédentes, caractérisée en ce que le carénage (2) comprend, d'une part, un dispositif d'entraînement (3) de l'outil de tonte tel qu'un arbre de tonte direct (5), et, d'autre part, au moins un organe de déplacement (6, 7) tel que des roues (8, 9) pour assurer le support mobile au sol, en ce que de préférence, un dispositif de réglage (14) destiné au réglage mutuel du dispositif d'entraînement (3) de l'outil de tonte et d'au moins un organe de déplacement (6, 7) agit par l'intermédiaire d'un parcours de réglage sur au moins un organe de réglage (21, 22) réalisé sous la forme d'un support réglable et en ce qu'en particulier, l'organe de transmission (37) étiré et/ou soumis à traction d'un moyen de réglage prévu entre au moins un organe de réglage (21, 22) d'un dispositif de réglage (14) et une manette (16) comprend un segment actionné par la manette (16) et un segment entraînant l'organe de réglage (21, 22) correspondant.

13. Tondeuse à gazon selon l'une quelconque des revendications précédentes, caractérisée en ce qu'au moins un organe de support au sol de la tondeuse à gazon est réglable en hauteur par rapport au carénage (2), en ce qu'en particulier, deux logements (23, 24) disposés l'un derrière l'autre dans le sens de la marche sont prévus pour les organes de réglage, pour l'essentiel sous les essieux (10, 11) de l'organe de support au sol, et en ce que ces logements sont reliés entre eux par un moyen de transmission (20) à peu près parallèle au plan de marche, situé sur le côté du dispositif d'entraînement (3) de l'outil de tonte, et à l'étage de transmission (18) du démultiplicateur (17) par l'organe de transmission (37) autant dire droit.

14. Tondeuse à gazon selon l'une quelconque des revendications précédentes, caractérisée en ce qu'une manette de réglage (16) d'un dispositif de réglage (14) est accessible par le haut de la tondeuse à gazon (1) et située en substance sur sa face supérieure, son axe de rotation étant en particulier droit, à peu près entre les charnières (39) des montants (13) d'un guidon en étrier (12) pour la tondeuse à gazon (1).
